# EUROPEAN PATENT SPECIFICATION

(11) **EP 1 743 005 B1**
(45) Date of publication and mention of the grant of the patent: **28.05.2008**
(21) Application number: 05716358.6
(22) Date of filing: 24.03.2005
(51) Int. Cl.: C09J 5/06

(54) **BONDING OF PLASTIC WOOD COMPOSITES**
VERFAHREN ZUM VERBINDEN VON KUNSTSTOFF-/HOLZVERBUNDEN
COLLAGE DE COMPOSITES PLASTIQUE-BOIS

(30) Priority: 07.04.2004 EP 04252068
(43) Date of publication of application: 17.01.2007
(73) Proprietor: INEOS Manufacturing Belgium NV, 2040 Antwerpen (BE)
(72) Inventor: LAMBERT, Yves-Julien, B-1325 Chaumont-Gistoux (BE)
(74) Representative: Smith, Julian Philip Howard
(86) International application number: PCT/EP2005/003153
(87) International publication number: WO 2005/097932

(56) References cited:
- EP-A- 0 648 801
- EP-A- 1 026 197
- EP-A- 1 310 537
- WO-A-02/083824

## Description

The invention relates to the general field of composite materials made from wood or other cellulosic materials and plastics, and more particularly to a means of bonding together articles made from such composites.

Wood-plastic composites are typically used a replacement for wood (or plastic) in structural members employed in commercial and residential architecture, such as windows and doors. They also have widespread application as decking materials. The composite is typically made using an extrusion process with an input of polyolefin and wood fibre (e.g. sawdust) to form a composite material. Such materials often have improved processability, thermal and structural properties when compared with metal, vinyl, or wooden components. Structural members made from such composites, such as the members comprising a window frame, are typically secured together using an adhesive such as epoxy, or by mechanical fixings, e.g. a metal clasp. This is because heat-welding a pair of wood-plastic composite parts together generally provides an insufficiently strong bond, due to the high wood content in the composite.

EP 648801A discloses that laminates of polyvinyl chloride sheet and cellolusic materials such as fibre board may be bonded together by melting a thermoplastic polymer tie layer interposed between the layers, which tie layer comprises a copolymer of ethylene, ethyl acrylate and carbon monoxide. Since the bond is intended to create a laminated structure, the bonded surface area is relatively very large compared with the size of the two parts being bonded. Fibre boards such as medium density fibre-board (MDF) differ from wood-plastic composites in that the former typically comprise 80-90wt% fibre and 10-20wt% of an adhesive such as urea formaldehyde. They do not contain any thermoplastic resin.

We have found a means of providing strong bonds between objects made of wood-plastic composites which avoids the need for mechanical fixings or adhesives. By "adhesive" in this context is meant a compound which secures solely by chemical bonding.

Accordingly in a first aspect the invention provides an article having a pair of surfaces at least one of which is a composite of thermoplastic resin and wood fibre and the other of which also comprises thermoplastic resin and/or wood fibre, which surfaces are bonded together by a tie layer of a resin capable of chemically bonding to wood fibres.

In another aspect the invention provides a process for bonding together a pair of surfaces at least one of which is a composite of thermoplastic resin and wood fibre and the other of which also comprises thermoplastic resin and/or wood fibre, comprising the steps of interposing between said surfaces a tie layer of a resin capable of chemically bonding to wood fibres, and then bringing said surfaces together under conditions of heat and pressure, whereby at least a part of said tie layer is melted.

We have found that the invention provides a means of bonding resin-wood fibre composites which has a number of advantages over the use of adhesives. A strong bond is provided not only by melting of the resin in both the tie layer and the composite which then fuse together, but also by chemical bonding between the maleic anhydride and the wood fibres in the composite. The avoidance of a chemical adhesive eliminates any potential environmental problems due to solvents or toxic compounds such as formaldehyde.

Preferably, the two surfaces bonded together by the tie layer are both formed of a resin-wood composite. A typical example is the abutting surfaces of two members in a window frame, all of which is made of a resin-wood composite. However the invention also includes within its scope the bonding of a wood-resin composite article to another article which comprises pure resin or pure wood, and also the bonding of composites of different compositions or containing different resins.

For the tie layer, a resin capable of chemically bonding to wood fibres is required to overcome the natural incompatibility between hydrophilic wood fibres and the hydrophobic polymer matrix of the thermoplastic resin. Examples of resins capable of chemically bonding to wood fibres include silanes, titanium alcoholates, esters of phosphoric, phosphorous, phosphonic and silicic acids, metallic salts and esters of aliphatic, aromatic and cycloaliphatic acids, ethylene/acrylic or methacrylic acids, ethylene/esters of acrylic or methacrylic acid, ethylene/vinyl acetate resins, styrene/maleic anhydride resins or esters thereof, acrylonitrilebutadiene styrene resins,methacrylate/butadiene styrene resins (MBS), styrene acrylonitrile resins (SAN), and butadieneacrylonitrile copolymers.

Preferred resins capable of chemically bonding to wood fibres are resins which have been modified by a reactive group such as maleic anhydride or its esters, acrylic or methacrylic acid or their esters, vinylacetate, acrylonitrile, and styrene. Virtually any olefinically reactive residue that can provide a reactive functional group on a modified resin can be used. The modified base resin is preferably the same resin as that forming one or both of the surfaces to be bonded. Useful base resins are polyethylene and polypropylene. Ionomers of these resins may also be used.

The most preferred resins used as the tie layer comprise either a polypropylene modified with maleic anhydride residues or a polyethylene modified with maleic anhydride residues. It is preferred that the tie layer resin does not contain units of carbon monoxide or alkyl acrylates.

The tie layer may be in any form which enables it to be interposed between the two surfaces to be bonded. Preferably it is in the form of a sheet which is placed between the two surfaces, and then sandwiched between them as they are pushed together. However it may also be in the form of a powder or coating which is applied to one or both of the the surfaces before they are pushed together.

The thermoplastic resin of the resin-wood fibre composite is typically a polyolefin_{.}

A typical polyolefin material used in such composites is a polyethylene or polypropylene polymer having a melting point of about 130°C and a melt index MI₂ of from 0.1 to greater than 20 g/10min. A preferred polyethylene is a polyethylene homopolymer, or a copolymer containing 0.01 to 10 wt% of a C₂-C₆ alpha-olefin comonomer, with a preferred molecular weight of about 10,000 to 60,000. A preferred polypropylene material is a polypropylene homopolymer or copolymer containing 0.01 to 10 wt% of ethylene or a C₄-C₆ alpha-olefin comonomer, having a molecular weight of about 10,000 to 60,000. The composite is usually compatibilized using a compatibilizing agent that improves the wetting of the polymer on the wood fibre particle.

The wood fibre of the resin-wood fibre composite usually comprises the byproduct of sawing or milling softwoods commonly known as sawdust or milling tailings. Such wood fibre has a regular, reproducible shape and aspect ratio. Fibres are typically 0.1-5mm in length, up to 1mm in thickness and usually have an aspect ratio of at least 1.8.

While softwood is the primary source of wood fibre, it can also be derived from any number of available sources such as hardwood fibre ground newsprint, magazines, books, cardboard and wood pulps, and also various agricultural wastes (rice hulls, wheat, oat, barley and oat chaff, coconut shells, peanut shells, walnut shells, straw, corn husks, cornstalks, jute, hemp, bamboo, flax etc). All of the above are considered to be covered by the term "wood fibre" as used herein.

The ratio of resin to wood fibre in the composite may be any which provides a composite suitable for the purpose for which it is intended. Typically, the amount of wood fibre is from 10 to 80wt%, and the amount of resin from 20 to 90wt%. Preferred amounts of both wood fibre and resin are independently 30-70wt%. Compositions with a resin: wood fibre ratio of 30:70, 40:60, 50:50, 60:40 and 70:30 are all possible. The resin-wood fibre composite may also contain conventional additives such as fillers, lubricants, oxidation stabilizers, UV stabilizers, antistatic agents, antioxidants, fire retardants, dyes, pigments, plasticizers, mould release agents, extrusion mould release agents and the like. These additives are typically present at levels up to about 20 wt%, more usually from 0.1 to about 10 wt%, and most typically from 0.2 to 5 wt%.

The bonding process comprises bringing together the two surfaces to be bonded, with the tie layer sandwiched between them, under conditions of heat and pressure. In a preferred embodiment, the two surfaces are preheated immediately before being contacted, such that the residual heat upon contacting of the two surfaces is sufficient to melt the tie layer, thereby causing welding of the layer to the two surfaces. In the case where the tie layer is in the form of a separate sheet it may also be preheated, although it is obviously important not to melt it. In the case where the tie layer is pre-applied to one or both of the surfaces, the degree of heating should be sufficient to melt the tie layer for long enough that it is still molten when the two surfaces are pressed together.

In a preferred embodiment, heating of the surfaces is accomplished by bringing each surface into contact with a hot surface, eg of metal. This ensures that only the surface is heated. In one method of the invention, the surfaces are preheated by bringing them into contact with either side of a hot metal plate. When the surfaces are sufficiently hot, the surfaces are pulled away, the plate withdrawn and replaced with a sheet of the tie layer, and then the two surfaces pressed together.

The pressure is applied for a sufficient time for a secure bond to form between the two surfaces. It is preferred that pressure is applied until the surfaces have cooled sufficiently for the surfaces and the tie layer to have solidified.

A particularly preferred application for the invention is in the field of window frames made of resin/wood fibre composites. The invention provides an effective way of bonding together the individual members which make up a window frame.

### EXAMPLES

The flat ends of two resin - wood fibre composite window profiles were welded together and the tensile strength of the bond measured. The window profiles comprised identical members of a hollow composite of 30wt% high density polyethylene (including the usual additives such as lubricant, antioxidant and UV stabiliser) and 70wt% wood fibre, each having a cut end providing a flat surface of approximately 10cm² total surface area.

The two surfaces to be bonded were brought into contact with either side of a hot metal plate at 220°C for 1 minute under very light pressure (3kg). The surfaces were then pulled away, the hot plate withdrawn, and the tie layer (when used) interposed between the surfaces in its place. The surfaces were pressed together under pressure (17kg) without added heat for 7 minutes. The residual heat from previous contact with the hot plate was sufficient to weld the surfaces together.

The strength of the weld was evaluated by measuring the maximum tensile stress and maximum deformation using tensile bars. This was done by pulling the two halves of the welded profile apart at a rate of 2.5mm/minute (ISO 527-1 and ISO 1BA). Details of the tie layer used in each case and the results of the weld strength tests are given in Table I below.

**TABLE 1**

| Example | Film thickness µm | Film Type | Max Tensile Stress MPa | Max Deformation % |
|---|---|---|---|---|
| 1 | 25 | Eltex resin A (Maleic Anhydride HDPE)* | 7.00 | 0.34 |
| 2 | 100 | Eltex resin A (Maleic Anhydride HDPE)* | 7.20 | 0.35 |
| 3 | 70 | Eltex resin B (Ungrafted HDPE) | 5.30 | 0.30 |
| 4 | 110 | Film 90% Eltex resin C +10% Eltex resin D (both ungrafted HDPE) | 5.30 | 0.25 |
| 5 | | No Film | Break | |

| | | | | |
|---|---|---|---|---|
| * Eltex resin A is HDPE grafted with 2.5g/kg of maleic anhydride | | | | |

It can be seen from the Table above that the weld of the control example which did not contain any tie layer broke apart under the conditions of the test. A comparison of Examples 1 and 2 with Examples 3 and 4 shows that the use of a tie layer of maleic anhydride-grafted HDPE according to the invention provides a bond 30% stronger than that obtained using pure HDPE. Comparison of Examples 1 and 2 shows that the tie layer need only be 25 µm thick to obtain excellent results.

## Claims

1. Article having a pair of surfaces, at least one of which is a composite of polyolefin resin and wood fibre and the other of which also comprises polyolefin resin and/or wood fibre, which surfaces are bonded together by a tie layer of a resin capable of chemically bonding to wood fibres.

2. Process for bonding together a pair of surfaces at least one of which is a composite of polyolefin resin and wood fibre and the other of which also comprises polyolefin resin and/or wood fibre, comprising the steps of interposing between said surfaces a tie layer of a resin capable of chemically bonding to wood fibres, and then bringing said surfaces together under conditions of heat and pressure, whereby at least a part of said tie layer is melted.

3. Process according to claim 2, wherein the tie layer is in the form of a sheet.

4. Process according to claim 2 or 3, wherein the tie layer is in the form of a powder or coating applied to one or both of the surfaces prior to bonding.

5. Process according to any of claims 2 to 4, wherein the two surfaces are preheated immediately before being contacted, such that the residual heat upon contacting of the two surfaces is sufficient to weld the tie layer and the two surfaces.

6. Article or process according to any preceding claim, wherein both surfaces independently comprise a composite of polyolefin resin and wood fibre.

7. Article or process according to claim 6, wherein both surfaces form part of a window frame.

8. Article or process according to any preceding claim, wherein the tie layer comprises one or more of silanes, titanium alcoholates, esters of phosphoric, phosphorous, phosphonic and silicic acids, metallic salts and esters of aliphatic, aromatic and cycloaliphatic acids, ethylene/acrylic or methacrylic acids, ethylene/esters of acrylic or methacrylic acid, ethylene/vinyl acetate resins, styrene/maleic anhydride resins or esters thereof, acrylonitrilebutadiene styrene resins,methacrylate/butadiene styrene resins (MBS), styrene acrylonitrile resins (SAN), and butadieneacrylonitrile copolymers.

9. Article or process according to claim 8, wherein the tie layer comprises a resin which has been modified by maleic anhydride or its esters, acrylic or methacrylic acid or their esters, vinylacetate, acrylonitrile, or styrene.

10. Article or process according to any preceding claim, wherein the base resin of the tie layer is the same resin as that forming the polyolefin resin part of one or both of the surfaces to be bonded.

11. Article or process according to any preceding claim, wherein the tie layer comprises either a polypropylene modified with maleic anhydride residues or a polyethylene modified with maleic anhydride residues.

12. Article or process according to any preceding claim, wherein the polyolefin resin comprises a polyethylene or polypropylene polymer having a melting point of about 130°C and a melt index MI₂ of from 0.1 to greater than 20 g/10min.

## Patentansprüche

1. Gegenstand mit einem Paar an Oberflächen, von denen zumindest eine ein Verbundstoff aus einem Polyolefinharz und Holzfasern ist und die andere auch ein Polyolefinharz und/oder Holzfasern umfaßt, wobei die Oberflächen durch eine Zwischenlage aus einem Harz, das chemisch an Holzfasern binden kann, miteinander verbunden sind.

2. Verfahren zum Verbinden eines Paars an Oberflächen, von denen zumindest eine ein Verbundstoff aus einem Polyolefinharz und Holzfasern ist und die andere auch ein Polyolefmharz und/oder Holzfasern umfaßt, umfassend die Schritte des Einschiebens einer Zwischenlage aus einem Harz, das chemisch an Holzfasern binden kann, zwischen die Oberflächen und dann des Zusammenbringens der Oberflächen unter Bedingungen von Wärme und Druck, wobei zumindest ein Teil der Zwischenlage geschmolzen wird.

3. Verfahren nach Anspruch 2, wobei die Zwischenlage die Form einer Folie hat.

4. Verfahren nach Anspruch 2 oder 3, wobei die Zwischenlage die Form eines Pulvers oder einer Beschichtung hat, das/die vor dem Binden auf eine oder beide Oberflächen aufgebracht wird.

5. Verfahren nach einem der Ansprüche 2 bis 4, wobei die beiden Oberflächen unmittelbar bevor sie in Kontakt gebracht werden, vorerwärmt werden, so daß die Restwärme beim Inkontaktbringen der beiden Oberflächen ausreicht, die Zwischenlage und die beiden Oberflächen zu verschweißen.

6. Gegenstand oder Verfahren nach einem der vorstehenden Ansprüche, wobei beide Oberflächen unabhängig einen Verbundstoff aus Polyolefinharz und Holzfasern umfassen.

7. Gegenstand oder Verfahren nach Anspruch 6, wobei beide Oberflächen Teile eines Fensterrahmens sind.

8. Gegenstand oder Verfahren nach irgendeinem vorstehenden Anspruch, wobei die Zwischenlage eines oder mehrere von Silanen, Titanalkoholaten, Estern von Phosphor-, Phosphorig-, Phosphon- und Kieselsäuren, Metallsalzen und Estern aliphatischer, aromatischer und cycloaliphatischer Säuren, Ethylen/Acryl- oder Methacrylsäuren, Ethylen/Ester von Acryl- oder Methacrylsäure, Ethylen/Vinylacetatharzen, Styrol/Maleinsäureanhydridharzen oder Estern davon, Acrylnitril-Butadien-Styrol-Harzen, Methacrylat/Butadien-Styrol-Harzen (MBS), Styrol-Acrylnitril-Harzen (SAN) und Butadien-Acrylnitril-Copolymeren umfaßt.

9. Gegenstand oder Verfahren nach Anspruch 8, wobei die Zwischenlage ein Harz umfaßt, das durch Maleinsäureanhydrid oder dessen Ester, Acryl- oder Methacrylsäure oder deren Ester, Vinylacetat, Acrylnitril oder Styrol modifiziert worden ist.

10. Gegenstand oder Verfahren nach irgendeinem vorstehenden Anspruch, wobei das Basisharz der Zwischenlage dasselbe Harz ist wie das, das den Polyolefinharzteil einer oder beider der zu bindenden Oberflächen bildet.

11. Gegenstand oder Verfahren nach irgendeinem vorstehenden Anspruch, wobei die Zwischenlage entweder ein mit Maleinsäureanhydrid-Resten modifiziertes Polypropylen oder ein mit Maleinsäureanhydrid-Resten modifiziertes Polyethylen umfaßt.

12. Gegenstand oder Verfahren nach irgendeinem vorstehenden Anspruch, wobei das Polyolefmharz ein Polyethylen- oder Polypropylenpolymer mit einem Schmelzpunkt von etwa 130 °C und einem Schmelzindex MI₂ von 0,1 bis größer als 20 g/10 min umfaßt.

## Revendications

1. Article ayant une paire de surfaces, dont au moins une est un composite de résine de polyoléfine et de fibre de bois et dont l'autre comprend aussi une résine de polyoléfine et/ou une fibre de bois, lesquelles surfaces sont collées ensemble par une couche d'assemblage faite d'une résine capable d'adhérer chimiquement aux fibres de bois.

2. Procédé de collage d'une paire de surfaces dont au moins une est un composite de résine de polyoléfine et de fibre de bois et dont l'autre comprend aussi une résine de polyoléfine et/ou une fibre de bois, comprenant les étapes consistant à intercaler entre lesdites surfaces une couche d'assemblage faite d'une résine capable d'adhérer chimiquement aux fibres de bois, puis à réunir lesdites surfaces dans des conditions de chaleur et de pression, moyennant quoi au moins une partie de ladite couche d'assemblage est fondue.

3. Procédé selon la revendication 2, dans lequel la couche d'assemblage se présente sous la forme d'une feuille.

4. Procédé selon la revendication 2 ou 3, dans lequel la couche d'assemblage se présente sous la forme d'une poudre ou d'un revêtement appliqué sur l'une des surfaces ou les deux avant le collage.

5. Procédé selon l'une quelconque des revendications 2 à 4, dans lequel les deux surfaces sont préchauffées immédiatement avant d'être mises en contact, de telle sorte que la chaleur résiduelle au contact des deux surfaces est suffisante pour souder la couche d'assemblage et les deux surfaces.

6. Article ou procédé selon l'une quelconque des revendications précédentes, dans lequel les deux surfaces comprennent indépendamment un composite de résine de polyoléfine et de fibre de bois.

7. Article ou procédé selon la revendication 6, dans lequel les deux surfaces font partie d'un encadrement de fenêtre.

8. Article ou procédé selon l'une quelconque des revendications précédentes, dans lequel la couche d'assemblage comprend un ou plusieurs parmi les silanes, alcoolates de titane, esters d'acides phosphoriques, phosphoreux, phosphoniques et siliciques, les sels métalliques et les esters d'acides aliphatiques, aromatiques et cycloaliphatiques, l'éthylène/acides acryliques ou méthacryliques, l'éthylène/esters d'acide acrylique ou méthacrylique, l'éthylène/résines d'acétate de vinyle, le styrène/résines d'anhydride maléique ou leurs esters, les résines acrylonitrile-butadiène-styrène, les résines méthacrylate/butadiène-styrène (MBS), les résines styrène acrylonitrile (SAN) et les copolymères butadiène-acrylonitrile.

9. Article ou procédé selon la revendication 8, dans lequel la couche d'assemblage comprend une résine qui a été modifiée par un anhydride maléique ou ses esters, un acide acrylique ou méthacrylique ou leurs esters, du vinylacétate, de l'acrylonitrile ou un styrène.

10. Article ou procédé selon l'une quelconque des revendications précédentes, dans lequel la résine de base de la couche d'assemblage est la même résine que celle formant la partie résine de polyoléfine d'une ou des deux surfaces à collier.

11. Article ou procédé selon l'une quelconque des revendications précédentes, dans lequel la couche d'assemblage comprend soit un polypropylène modifié par des résidus d'anhydride maléique, soit un polyéthylène modifié par des résidus d'anhydride maléique.

12. Article ou procédé selon l'une quelconque des revendications précédentes, dans lequel la résine de polyoléfine comprend un polymère de polyéthylène ou de polypropylène ayant un point de fusion d'environ 130°C et un indice de fusion MI₂ de or à plus de 20 g/10 min.
